# FASCICULE DE BREVET EUROPEEN

(11) **EP 3 325 318 B1**
(45) Date de publication et mention de la délivrance du brevet: **17.04.2019**
(21) Numéro de dépôt: 16738443.7
(22) Date de dépôt: 13.07.2016
(51) Int. Cl.: B60S 3/04

(54) **BROSSE DE NETTOYAGE DE JANTE DE VÉHICULE AUTOMOBILE**
BÜRSTE ZUM REINIGEN DER FELGEN EINES KRAFTFAHRZEUGS
BRUSH FOR CLEANING THE RIMS OF A MOTOR VEHICLE

(30) Priorité: 20.07.2015 FR 1501535
(43) Date de publication de la demande: 30.05.2018
(73) Titulaire: Yao Dibi, Jean Max, 93100 Montreuil (FR)
(72) Inventeur: Yao Dibi, Jean Max, 93100 Montreuil (FR)
(74) Mandataire: Marconnet, Sébastien
(86) Numéro de dépôt international: PCT/EP2016/066692
(87) Numéro de publication internationale: WO 2017/012960

(56) Documents cités:
- GB-A- 1 550 111
- KR-A- 20110 055 350

## Description

La présente innovation concerne le nettoyage et l'entretien des jantes automobiles ou d'autres véhicules roulant sur des pneus avec jantes dont l'accès est rendu difficile par leurs formes et leurs structures. Par extension, cette innovation concerne également tout objet superposable à une jante et dont le nettoyage peut en être facilité.

Pour les habitués de la piste de lavage, l'entretien automobile est une véritable épreuve qui nécessite parfois beaucoup de dextérité.

Si pour la carrosserie le nettoyage à la lavette est nécessaire pour obtenir une brillance parfaite malgré les solutions proposées par les centres de lavage, l'accès à cette carrosserie est simple contrairement à la jante dont l'accès est compliqué du fait de son architecture rendant ainsi le nettoyage plus difficile et particulièrement en sa partie intérieure.

Afin de faciliter la compréhension de l'exposé, rappelons la définition d'une jante ainsi que son anatomie. Selon le dictionnaire une jante est une pièce mécanique de forme circulaire tournant autour d'un axe.

Elle est étroitement liée à plusieurs composants :
- Le pneu qui se fixe sur l'extérieur de la jante mais qui ne nous intéresse pas dans ce sujet.
- Le voile qui est l'élément central venant se fixer à l'intérieur de la jante sur le flasque du moyeu. Le voile est vissé par des écrous de roue.

Le moyeu est la partie centrale de la jante. Il assure le guidage de la roue autour de l'essieu qui relie les deux roues. Le tambour et le disque de frein sont aussi coalescents du moyeu. Le déport est la distance en millimètres qui sépare le plan médial vertical de la jante au plan d'appui sur le moyeu. Plus le déport est petit, plus la jante ressort.

Le voile est composé de rayons ou branches. Indispensables dans son architecture et éléments de design, les rayons constituent des obstacles au bon nettoyage d'une jante en ce sens qu'ils empêchent l'accès aisé à sa partie intérieure que nous appellerons "l'arrondi" (r).

Il existe différentes sortes de rayons. Entre les classiques trois, cinq ou sept branches, on trouve les rayons tels un vélo et entre ces deux tous les intermédiaires. Les rayons par leur disposition gênent l'accès à "l'arrondi".

Le disque de frein (f) et le tambour qui en général sont distants de quelques centimètres de l'arrondi en gênent également l'accès.

Du fait de la disposition des rayons, du disque de frein et du tambour, on peut distinguer plusieurs zones sur "l'arrondi" (r). La zone en amont du disque de frein qui est d'accès facile et les zones d'accès plus compliqué que l'on peut diviser en trois:
La zone a (a) située sur "l'arrondi" (r) en aval du disque de frein et du tambour qui en empêchent l'accès.
La zone b (b) située sur "l'arrondi" (r) mais cachée par le rayon de la jante.
La zone c (c) représentée par la face postérieure du rayon de la jante.

Il existe différentes solutions d'entretien des jantes à savoir les produits industriels en aérosol ou en application, les brosses pour nettoyage manuel, les lavettes ou chiffons.

Les Produits industriels pour jantes en aérosol ou en application sont certainement les plus utilisés. Toutefois il faut un jet d'eau pour éliminer le produit afin de faire briller la jante. C'est pourquoi ces produits sont en général appliqués le jour du lavage du véhicule tout entier.

Le problème est que l'application du seul produit ne permet pas l'obtention d'une propreté parfaite et d'une brillance satisfaisante d'où les saletés résiduelles surtout au niveau des zones précédemment citées. C'est pourquoi le nettoyage manuel est quand même nécessaire.

Concernant les brosses pour nettoyage manuel, il en existe différentes sortes mais toutes ont un point commun qui est de se présenter en forme de brosse à biberon avec un manche et une tête nettoyante dont le bout est arrondi ou massif. Le problème est que cette forme n'est pas adaptée à celle de la jante qui dans un plan frontal est arrondie et en coupe transversale se présente sous forme convexe.

Il arrive que le bout soit tellement massif qu'il ne peut se glisser sous le disque de frein empêchant ainsi le nettoyage de la partie de l'arrondi (r) situé au-delà du disque (a).
De plus pendant son utilisation qui est manuelle il faut apporter le produit d'entretien car la forme de la jante ne permet pas de garder le liquide d'où une gymnastique quasi permanente. Certains le rajoutent à l'aide d'un récipient tandis que d'autres le font à la main. Soit il faut lâcher la brosse pour apporter le produit de la même main, soit il faut le rajouter de l'autre main.

Parmi ces brosses, il en existe dont la lavette habille le corps. Le problème est que cette lavette bouge pendant son utilisation car mal fixée. Ce qui complique encore un nettoyage déjà très difficile.

De plus, après un nettoyage de jantes, la brosse ou la lavette utilisée se retrouve imprégnée de saletés grasses difficiles à enlever d'où l'intérêt de les retirer pour les laver convenablement.

Quant à ceux qui ne disposent pas de brosse, ils y vont à la main avec une lavette ou une éponge or nous avons vu que l'accès à la partie intérieure de la jante est difficile notamment à cause du disque de frein qui est contendant.

Le résultat du nettoyage peut être satisfaisant selon la dextérité et les astuces des uns et des autres mais souvent au prix d'une ou plusieurs blessures de profondeur variable à la main. La blessure représente le principal le problème du nettoyage des jantes.

Le temps et l'inconfort viennent compliquer encore le lavage. En effet la difficulté d'accès impose le nettoyage des espaces entre deux rayons l'un après l'autre et donc la répétition de mouvements qui finissent par lasser assez rapidement. Vu qu'il existe au moins quatre jantes sur la plupart des véhicules, le nettoyage des jantes peut devenir très long.

Malgré tout, la jante n'est propre que le jour du nettoyage et dans les jours suivants car rapidement s'y dépose une poussière grasse. S'il est vrai que pour les carrosseries existent des solutions de nettoyage rapide, pour la jante c'est plus fastidieux compte tenu des problèmes inhérents à son architecture.

Le nettoyage rapide est possible mais difficile. Autrement dit, comment nettoyer rapidement les jantes sans être obligé de recourir à un lavage complet du véhicule.
Ainsi les difficultés liées à l'état de la technique antérieure peuvent être résumées aux difficultés d'accès à la partie interne de la jante, aux blessures, au temps, à l'inconfort, à la l'instabilité des lavettes pendant le nettoyage et au nettoyage rapide.

Le document KR20110055350 décrit un dispositif de nettoyage de roue pour un véhicule prévu pour nettoyer la partie incurvée de la roue.

Le document GB1550111 décrit un appareil muni d'une brosse rotative destinée à nettoyer la jante d'une roue.

Le dispositif selon l'invention permet de remédier à toutes ces difficultés. Il s'agit d'une brosse à fonctionnement manuel mais adaptable à un système de fonctionnement automatique, dont les caractéristiques autorisent sa mobilisation à l'intérieur de la jante. Sa fonction est d'optimiser chaque mouvement afin de nettoyer le maximum de surface en un minimum de temps, de permettre l'accès aux zones difficiles, éventuellement apporter le liquide de nettoyage en activant un bouton pressoir pendant le nettoyage, et accessoirement nettoyer la portion de pneu adjacente, sans qu'à aucun moment la main ne touche quelconque partie de la roue afin d'éviter les blessures.

Le dispositif respecte la structure de toute brosse c'est-à-dire une partie active la tête nettoyante qui va au contact de la saleté, d'un col plus ou moins apparent, d'un manche et parfois et d'autres accessoires.

Vu la variété et la complexité des jantes, le dispositif peut se présenter sous plusieurs variantes particulièrement au niveau de la tête nettoyante mais respecte un structure de base constante à savoir une tête nettoyante qui est l'unité fonctionnelle (4), elle-même pouvant se décomposer se décomposer en corps horizontal (1), corps vertical principal (2) et corps vertical secondaire (3) associés à un manche. Les dits éléments pouvant fonctionner de façon autonome.

Le dispositif est une brosse à fonctionnement manuel mais adaptable à un système de fonctionnement automatique destinée au nettoyage des jantes automobiles ou tout autre objet superposable qui selon une première caractéristique est présentée en kit à monter soi-même et comprenant obligatoirement un manche (5), une tête nettoyante représentée par soit un corps horizontal (1) soit un corps vertical principal (2), soit un corps vertical secondaire (3), soit une unité fonctionnelle (4), et des accessoires dont la présence n'est pas obligatoire à savoir, un socle (6), un réservoir (9), des canalisations (10), un pressoir (41), une manivelle (7) avec son manchon cylindrique creux (8),un revêtement spécifique recouvrant les faces actives (44) munies d'orifices (43).

Selon une 2° caractéristique l'association des dits corps horizontal (1) et corps vertical principal (2) forme l'unité fonctionnelle (4) à laquelle peut éventuellement s'associer le dit corps vertical secondaire (3) et le dit corps horizontal (1), le dit corps vertical principal (2), la dite unité fonctionnelle (4) pouvant se fixer au niveau des encoches (40) du socle (6).

Selon une 3° caractéristique, la dite unité fonctionnelle (4) et ses composants à savoir le dit corps horizontal (1), le dit corps vertical principal (2), accessoirement le dit corps vertical secondaire (3), représentent chacune une forme de tête nettoyante à laquelle est associée un manche (5), l'ensemble pouvant s'associer ou non au socle (5), à la manivelle (7) avec son manchon cylindrique creux (8), au réservoir (9), aux canalisations (10) avec ses orifices (43), au pressoir (41), au revêtement, l'association des éléments du kit pouvant donc être partielle ou totale, et ce même si le résultat de cette association est coulé en un seul bloc et quel que soit le mode de fixation des dits éléments.

Selon une 4° caractéristique le corps horizontal (1) fonctionnant en position horizontale est lui-même composé de 2 parties. Une partie interne (11) d'épaisseur fine qui dans le plan frontal, suit une forme concave épousant "l'arrondi" (r) de la jante et pouvant se subdiviser en plusieurs branches donnant les formes unique (18), double (19) ou multiple (20). Multiple dans ce contexte signifiant au moins 3 branches. Une partie externe (12) d'épaisseur fine également et inclinée par rapport au plan de la partie interne (11) selon un angle spécifique latéral (14) pouvant varier entre 0 à 90° exclus de sorte qu'elle épouse le débord de la jante avec la possibilité de toucher la portion de pneu adjacente.

Cette partie externe (12) peut être arrondie ou plane ou tous les intermédiaires entre les deux. De même elle peut comporter des angles, des brisures de façon à ce que sa forme s'adapte le plus possible à celle de la jante nettoyée. Le corps horizontal peut également être composé de 2 demi-corps horizontaux symétriques issus de la scission du dit corps horizontal selon la ligne médiane, donnant le corps horizontal double corps (21).

Selon une 5° caractéristique, la partie externe (12) étant toujours moins large que la partie interne (11), la zone de jonction de ces deux parties est automatiquement creusée d'un angle spécifique supérieur (13) et ce, même si l'angle prend naissance sur la partie interne (11). Cet angle constituant l'astuce principale de l'invention autorise les mouvements de la brosse à l'intérieur de la jante et permet le nettoyage de la zone située juste derrière le rayon (b).

Selon une 6° caractéristique, le corps horizontal peut être percé d'un trou (15) laissant passer la valve fixée à la jante. Les dimensions de ce trou sont définies de sorte que la mise en mouvement de la brosse ne percute pas la dite valve.

La forme unique est adaptée aux jantes dont l'espace entre deux rayons est large telles les 3, 5 ou 7 rayons. La forme multiple est quant à elle adaptée aux jantes dont la pluralité de rayons complique singulièrement l'accès à "l'arrondi". Et entre ces deux, tous les intermédiaires dont la forme double.

Ainsi épousant parfaitement la jante, ce corps horizontal (1) glisse entre "l'arrondi" (r) et le disque de frein (f) atteignant la zone difficile (a) et sans percuter la valve lorsque l'on se retrouve en sa présente, grâce au trou(15).

Par conséquent en un minimum de mouvement, il permet le nettoyage d'une large surface de "l'arrondi" située entre deux rayons y compris la zone difficile (a) et grâce à son angle (13), la zone située immédiatement derrière la branche (b). Ce corps horizontal permet donc l'accès aux zones difficiles et un gain de temps.

Le corps horizontal peut être muni d'au moins 2 types d'appendices. Le ou les appendices proximaux (16) permettant la fixation du ou des corps verticaux principaux (2).

Le ou les appendices distaux (17) permettant la fixation du ou des corps verticaux secondaires (3).

Dans les différentes modes de réalisation, le choix de la forme du corps horizontal est prédéfini. Il peut être unique (18), double (19), multiple (20), double corps (21) avec ou sans trou (15), avec ou sans appendices avant de s'associer aux autres éléments également prédéfinis. Le choix des éléments constitutifs est également valable au cas où la brosse est coulée en un seul bloc.

Selon une 7° caractéristique, le corps vertical principal fonctionnant en position verticale est composé d'un support (22) avec son appendice (23) et d'au moins une branche pouvant se subdiviser en plusieurs mais toutes portées par le même support donnant comme le corps horizontal, un corps vertical uni branche (25), double branche (26) ou multi branches (27). Il peut être fixé grâce à son appendice (23) au niveau du ou des appendices proximaux (16) du corps horizontal (1). Il peut être unique (28), double (29) ou multiple (30), chacun sur son support. Dans le second cas, chaque corps vertical principal peut être positionné symétriquement par rapport à l'autre se réunissant en leur sommet. Les 2 corps verticaux pouvant également ne pas se toucher. Et entre ces deux tous les intermédiaires.

Selon une 8° caractéristique chaque branche du corps vertical principal (2) est composée d'au moins 2 faces d'épaisseurs fines. Une face interne (31) et une face externe (32) réunies par un angle (33) pouvant varier de 0 à 180 degrés exclus. Chaque face peut être plane, arrondie ou complexe mais toujours d'épaisseur fine.

Selon une 9° caractéristique la face interne (31) de la branche du corps vertical principal peut être moins haute et moins large que la face externe (32) afin d'éviter le choc à chaque mouvement contre d'une part le sommet de l'angle entre 2 rayons voisins de la jante et d'autre part contre le disque de frein à. Au cas où il existe une troisième face (34), elle répond aux mêmes critères que ceux de la face interne (31).

Selon une 10° caractéristique chaque branche du corps vertical principal est inclinée dans le plan frontal entre 0 et 90 degrés exclus, ainsi que dans le plan sagittal entre 0 et 90 degrés exclus permettant son adaptation à l'inclinaison du rayon de la jante. Une fois définies, l'inclinaison est soit imprimée par les supports lors de la fixation au niveau des appendices soit façonnée à la fabrication.

Le corps vertical principal (2) permet grâce à ses faces internes (31) et externes (32) le nettoyage des faces externe et interne de chaque rayon de la jante de même que le moyeu grâce à la zone formée par l'union de ses deux branches.

Vu que le corps vertical principal (2) peut être double et que ses deux branches peuvent être symétriques réunies à l'autre extrémité et qu'il peut être fixé au corps horizontal (1) donc mobilisé en même temps ; il autorise d'un même mouvement le nettoyage de deux branches voisines. Ainsi avec le corps horizontal associé au corps vertical principal, il est possible d'un même mouvement de nettoyer "l'arrondi" de la jante, la zone difficile située au-delà du disque de frein (a), la zone difficile cachée par le rayon de la jante (b) les deux branches voisines et même la zone de jonction des rayons de la jante, soit le moyeu. Et ce, sans qu'à aucun moment la main ne touche quelconque partie de la jante. Par conséquent la brosse évite les blessures et permet un gain de temps. Dans les différentes formes de réalisation, le choix du corps vertical est prédéfini.
Il peut s'agir d'un corps vertical unique, double, multiple, uni branche, double branche ou multi branche.

Il est prévu que ce corps vertical fonctionne seul ou s'associe au corps horizontal formant l'unité fonctionnelle qui peut elle-même s'intégrer au socle.

Le corps vertical accessoire (3) est dit vertical car fonctionnant en position verticale. Dans le sens de la hauteur, ses bords peuvent être arrondis, droits ou tous les intermédiaires entre deux mais dans tous les cas d'épaisseur fine afin de pouvoir se glisser entre la jante et le disque de frein. Il peut fonctionner seul associé à un manche mais peut également être fixé au corps horizontal au niveau de son ou ses appendices distaux (17). Il permet le nettoyage de la face interne du rayon (c) de la jante qui est une face non accessible à la vue de l'extérieur.

Au cas où il fonctionne seul, il est fixé à un manche et peut s'associer aux autres éléments du kit.

Au cas où il est associé à l'unité fonctionnelle, il est possible de nettoyer d'un même mouvement, l'arrondi de la jante situé entre deux rayons, la zone d'accès difficile (a) située au-delà du disque de frein, la zone d'accès difficile (b) cachée par le rayon de la jante et la face postérieure du même rayon (c).

Il existe au moins un manche (5) par dispositif. Il peut se présenter sous forme de cône ou d'anse et est donc de forme variable. Il peut être positionné sur le manche ou être rattaché au corps horizontal (1), au corps vertical principal (2), au corps vertical accessoire (3), à l'unité fonctionnelle (4) ou au socle (6). En ce qui concerne le socle (6), le dit manche (5) lui est soit directement fixé, soit fixé par l'intermédiaire de la manivelle (7). Le manche (5) peut être double (36) fixé au corps horizontal double (21). Dans ce cas ses deux parties sont séparées par un système permettant de les rapprocher puis de les éloigner selon qu'il est en position de repos ou de fonction. Le but de la manoeuvre étant de rapprocher ou d'éloigner les deux parties du corps horizontal double (36) afin d'éviter au bras le dit mouvement.

Le manche permet de mobiliser l'ensemble du dispositif et d'accéder au pressoir (41) sans changer de main au cours du lavage.
La position du manche est variable mais ne doit pas gêner les mouvements ni percuter quelconque partie de la jante.

Selon une 11° caractéristique, le manche peut être pivotant, basculant (38) dans le sens opposé et/ou adaptable à un manche supplémentaire circulaire (39) ou à un manche télescopique par l'intermédiaire des emplacements prévus à cet effet et ce, quel que soit le type d'emplacement et la nature de la fixation. En effet, la forme de la jante qui est circulaire et sa position basse obligent de s'abaisser pour la nettoyer. Le nettoyage de la partie de la jante située vers le bas est relativement aisé mais pour la partie située vers le haut qui de plus n'est pas visible sans s'abaisser fortement, il faut retourner la brosse. Ce qui oblige le retournement du manche, donc à s'abaisser un peu plus et tordre le poignet. Le fait que le manche puisse pivoter ou basculer rend un peu plus aisée la tâche en le rehaussant et en évitant la torsion du poignet.

Le manche supplémentaire circulaire qui est adaptable au manche principal sans toucher la partie externe (12) du corps horizontal et en laissant suffisamment de marge pour être pris en main présente le même intérêt. Le manche télescopique a pour but de réduire au maximum l'effort d'abaissement voire permettre le nettoyage de la jante en position debout pour plus de confort.

Le socle (6) est un élément du kit destiné à fixer plusieurs unités fonctionnelles ou plusieurs corps horizontaux qui selon une 12° caractéristique, est composé d'armatures ménageant au moins deux encoches disposées selon un cercle. Chaque encoche permettant la fixation soit d'un corps horizontal, soit d'une unité fonctionnelle, et ce quel que soit le mode de fixation.

Le socle (6) peut être tout ou partie d'un cercle. Sa mobilisation se fait grâce à un manche (5) qui lui est soit directement fixé, soit fixé par l'intermédiaire de la manivelle (7). La face du socle en contact avec la jante peut être également active donc munie d'orifices.

La manivelle (7) quand elle existe, est fixée au socle (6) à l'une de ses extrémités et permet de mettre la brosse en mouvement grâce au manche (5) qui est fixé à l'autre extrémité, en tenant le manchon cylindrique creux (8). La zone de fixation de la manivelle sur le socle étant centrée.

Le manchon cylindrique creux (8) quand il existe, sert d'appui à la mobilisation de la manivelle et par son intermédiaire la mobilisation de la brosse.

Le réservoir de produit (9) quand il existe et comme l'indique son nom, sert à stocker le produit de nettoyage.

Fixe ou adaptable, il contient la solution de nettoyage. Cette solution diffuse dans les canalisations (10) de la brosse pour s'évacuer au niveau des orifices (43). L'intérêt de l'adaptable est qu'il autorise le réapprovisionnement en produit lorsque le réservoir est vide et son retrait pour élimination des saletés dues au nettoyage. Toutefois, la présence du réservoir n'est pas obligatoire.

L'autre avantage du réservoir est qu'il peut également contenir un produit sans rinçage de sorte à autoriser un nettoyage rapide sans être obligé de laver entièrement la jante.

Les canalisations (10) apparentes ou intégrées au corps du dispositif, permettent la diffusion du produit de nettoyage à l'intérieur de la brosse afin d'en assurer un débit constant vu que la forme de la jante ne permet pas de conserver quelconque liquide. Toutefois la présence des canalisations n'est pas obligatoire.

Le pressoir (41) quand il existe, permet l'activation du réservoir et la libération de la solution de nettoyage.

Par une pression, il apporte la solution de nettoyage stockée dans le réservoir, exonérant l'utilisation de l'autre main ou de jongler entre le produit de nettoyage et la brosse de la même main. Toutefois, la présence de ce pressoir n'est pas obligatoire.

Le revêtement habille toutes les faces actives (44) c'est à dire les parties de la brosse au contact direct de la jante. Il se présente soit sous la forme de poils intégrés au corps du dispositif, soit sous la forme de lavettes parfaitement adaptables et escamotables. Selon une 13° caractéristique la forme des lavettes est parfaitement superposable à celle des faces actives du dispositif et y sont fixées. Ce, quel que soit le système de fixation choisi et le matériau de la brosse. La fixation empêche l'éponge de bouger pendant le nettoyage. Ainsi épousant parfaitement le corps du dispositif, le revêtement assure un nettoyage des moindres recoins de la jante sans bouger.

Les orifices (43) sont percés sur les faces actives (44) du dispositif. Ils communiquent avec les canalisations et permettent l'arrivée de la solution de nettoyage directement au contact de la jante au travers des lavettes ou des poils.

Selon les modes particuliers de réalisation et selon une 14° caractéristique, il est prévu que :
- le corps horizontal fonctionne seul c'est-à-dire qu'il représente à lui seul la tête nettoyante. Auquel cas, il est muni d'un manche et éventuellement associé à un ou plusieurs autres éléments du kit ;
- le corps vertical principal (2) fonctionne seul c'est-à-dire qu'il représente à lui seul la tête nettoyante auquel cas, il est muni d'un manche et éventuellement associé à un ou plusieurs autres éléments du kit ;
- le corps vertical secondaire (3) fonctionne seul c'est-à-dire qu'il représente à lui seul la tête nettoyante auquel cas, il est muni d'un manche et éventuellement associé à un ou plusieurs autres éléments du kit ;
- l'unité fonctionnelle fonctionne (4) seul auquel cas elle est munie d'un manche et éventuellement associée à un ou plusieurs autres éléments du kit ;
- Le dispositif soit réalisé avec un socle (6), dans ce cas ce dernier est muni d'un manche qui lui est soit directement rattaché, soit rattaché par l'intermédiaire d'une manivelle (7). Le socle pouvant être composé d'au moins 2 encoches (40) et la ou les encoches pouvant accueillir chacune une unité fonctionnelle ou un corps horizontal. La face du socle en contact avec la jante peut être également active donc munie d'orifices ;
L'ensemble pouvant éventuellement être associé à un ou plusieurs autres éléments du kit.
- Dans chacune de ses formes de réalisation, il existe autant de variantes possibles qu'il y a de choix entre les corps horizontaux unique (18), double (19), multiple (20), double corps (21); les corps verticaux principaux unique (28), double (29), multiple (30), uni branche (25), double branche (26) ou multi branche (27), le socle (6) avec une ou plusieurs encoches (40); auxquelles peuvent s'associer ou non à un ou plusieurs autres éléments du kit;
Et ce même si le résultat des dites associations est coulé en seul bloc et quel que soit le matériau.

Les dessins annexés illustrent l'invention. Pour en faciliter la compréhension, nous illustrerons les modes de réalisation du plus simple au plus complexe.

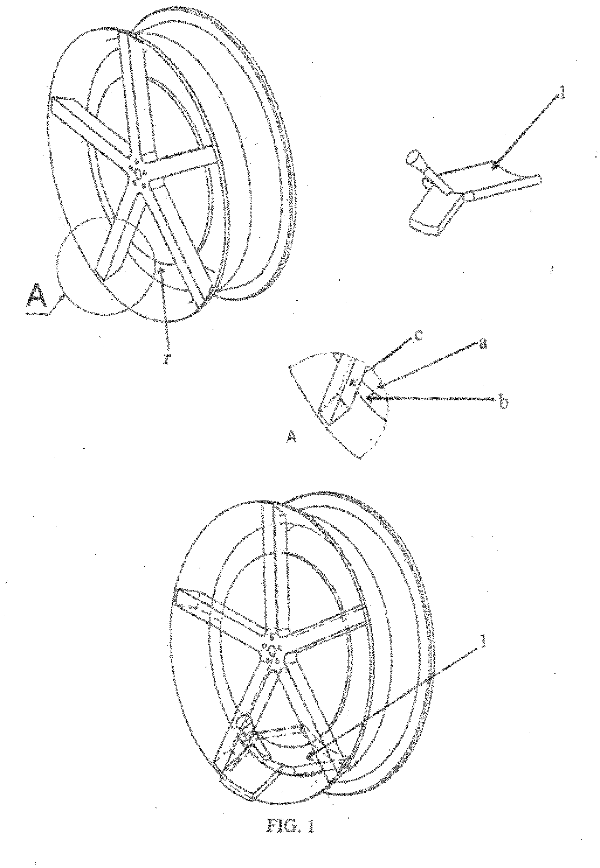

La figure 1 illustre en vues de perspective, d'une part la structure d'une jante montrant l'arrondi (r) sur le dessin en haut à gauche avec en coupe sur le dessin du milieu les zones de nettoyage difficile (a) (b) (c), et d'autre part une tête de nettoyage uniquement constituée par un corps horizontal (1) sur le dessin en haut à droite et enfin ce corps horizontal s'insérant dans la jante. Comme le montre le dessin, le corps horizontal (1) glisse entre "l'arrondi" (r) et le disque de frein (f) puis grâce à ses angles atteint les zones a et b.

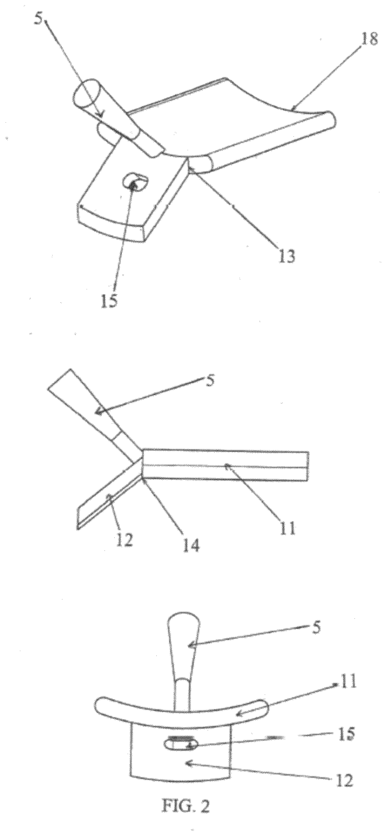

La figure 2 illustre en vues de perspective, de profil et de face une tête nettoyante constituée par un corps horizontal unique (18) avec sa partie interne (11) sa partie externe (12), percée d'un trou (15), son angle spécifique supérieur (13), son angle spécifique latéral (14) et son manche (5).

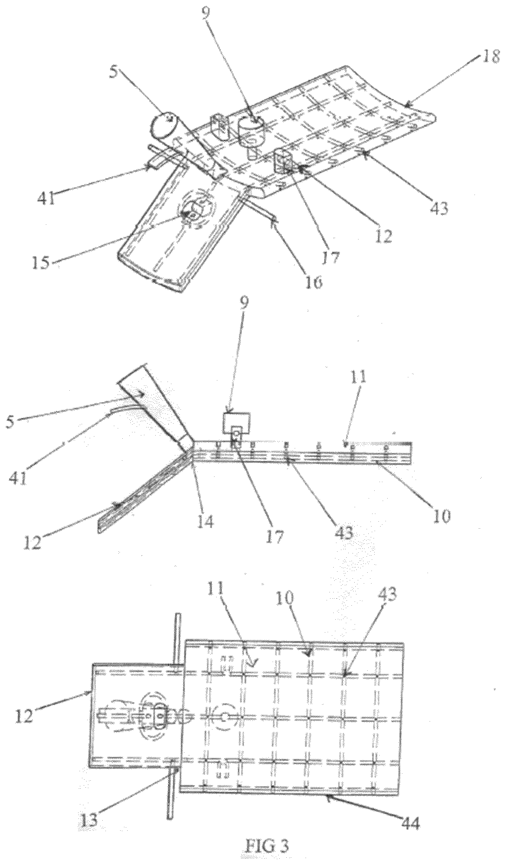

La figure 3 illustre en vues de perspective, de profil et inférieure, une variante avec une tête nettoyante constituée par un corps horizontal unique (18) fonctionnant seul associé à un manche (5), un pressoir (41), un réservoir (9), des canalisations (10), des orifices (43). Le revêtement n'a pas été représenté pour ne pas masquer les dits orifices localisés sur la face active 44). La position du réservoir est variable mais ne doit pas gêner les mouvements ni percuter quelconque partie la jante. Dans cette figure le dit réservoir est positionné sur la partie interne (11) du corps horizontal.

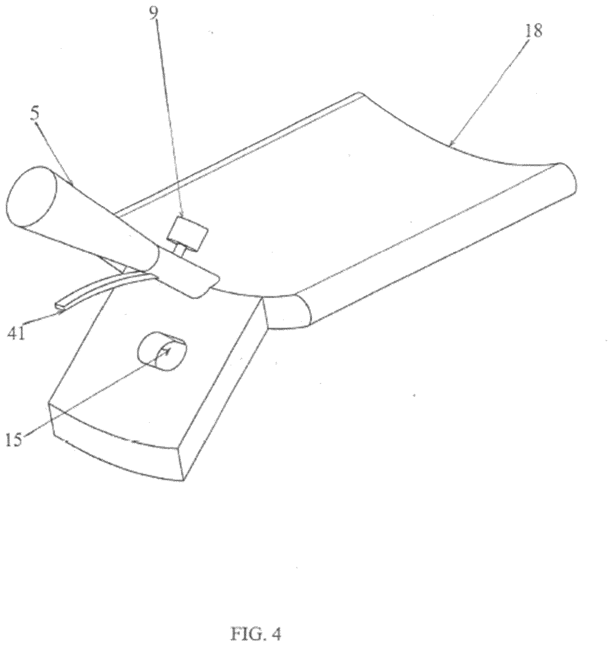

La figure 4 illustre en vue de perspective, une variante de la figure précédente avec une tête nettoyante représentée par un corps horizontal unique (18) associé à un manche (5), un bouton pressoir (41) et un réservoir (9) positionné sur le manche(5).

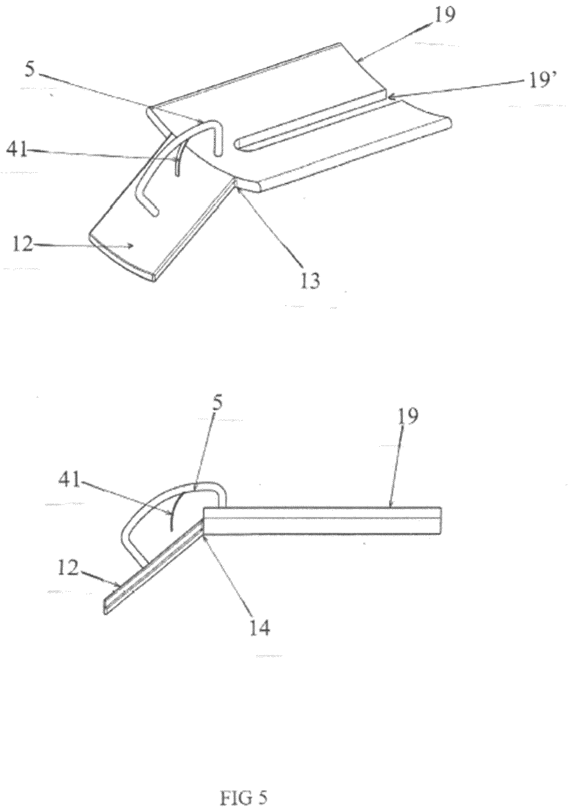

La figure 5 illustre en vues de perspective et en coupe une variante avec une tête nettoyante constituée par un corps horizontal double (19) avec ses deux parties séparées par un espace (19') et fonctionnant seul avec un manche (5), un pressoir (41), sans les autres accessoires.

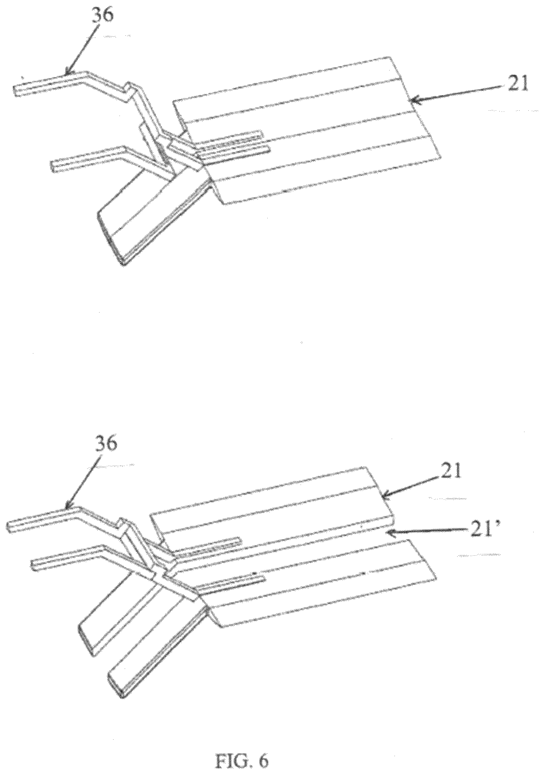

La figure 6 illustre en vues de perspective une tête nettoyante constituée par un corps horizontal double corps (21) associé à un manche double (36) sans les accessoires. Sur le dessin du haut, le dit corps horizontal est en position fermée et sur le dessin du bas, il est en position ouverte laissant apparaitre l'espace entre les deux parties (21').

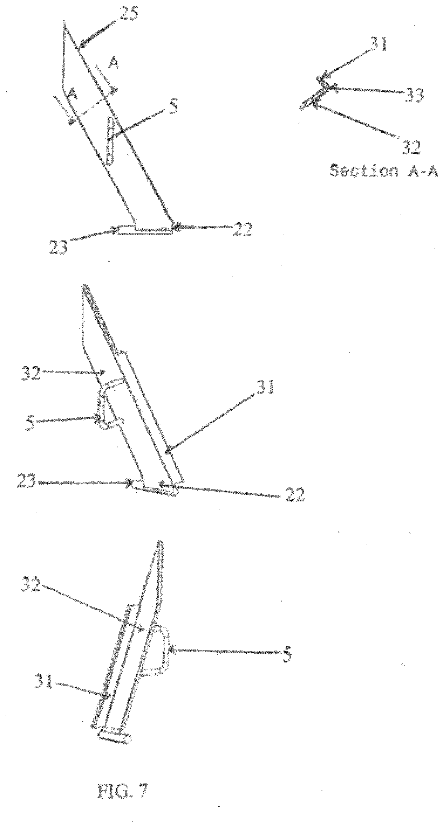

La figure 7 illustre en vues de face et de perspectives, une tête nettoyante constituée par un corps vertical principal unique, uni branche (25), son support (22), son appendice (23) et fonctionnant seul avec un manche (5) sans les autres accessoires. La vue en section illustre la face interne (31) et la face externe (32) du dit corps vertical principal de même que l'angle (33) les réunissant.

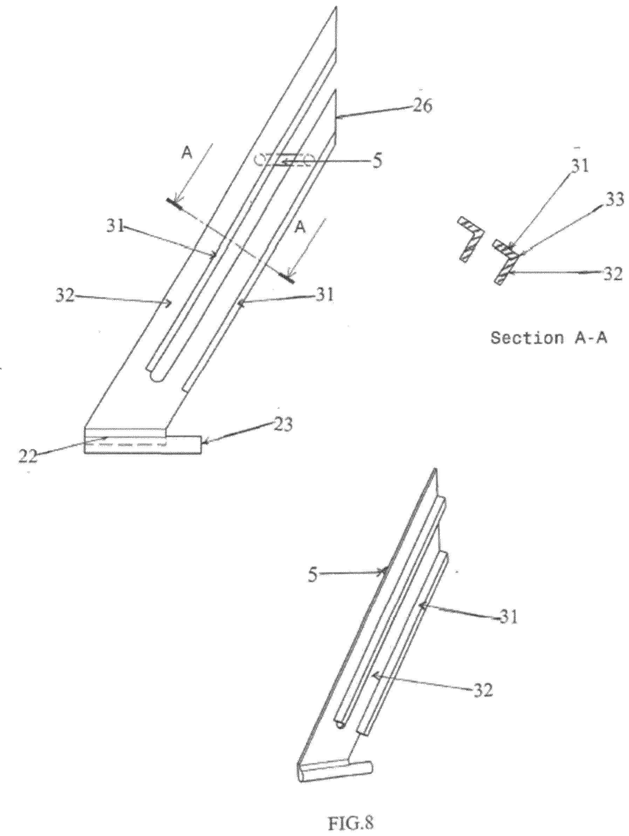

La figure 8 illustre en vue de face et en perspective, une variante avec une tête nettoyante constituée par un corps vertical principal unique, double branche (26) fonctionnant seul avec un manche (5) sans les accessoires. La section montre la face interne (31), la face externe (32) de chacune des branches du corps vertical principal unique, double branche (26) de même que l'angle (33) les réunissant.

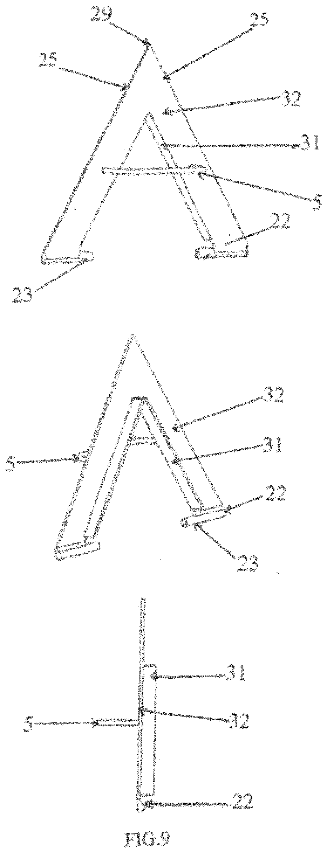

La figure 9 illustre en vues de perspective et de profil, une variante avec une tête nettoyante constituée par un corps vertical principal double (29) uni branche (25) fonctionnant seul avec un manche (5) sans les accessoires.

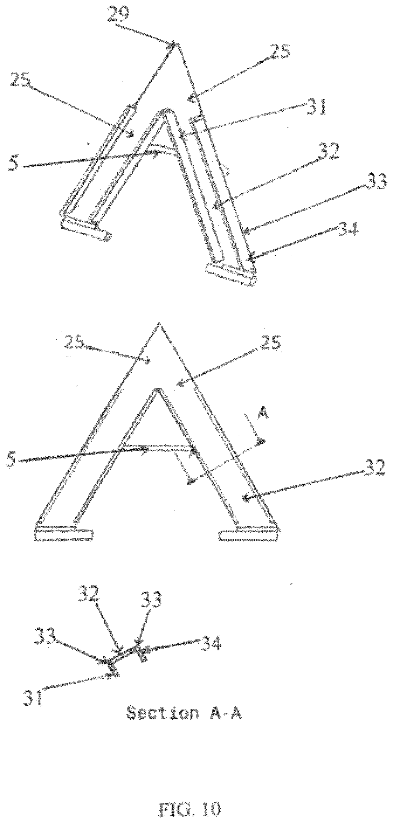

La figure 10 illustre en vues de perspective, de face et section, une variante avec une tête nettoyante constituée par un corps vertical principal double (29), uni branche (25), présentant 3 faces (31) (32) (34) réunies par leurs angles (33) et fonctionnant seul avec un manche, sans les accessoires.

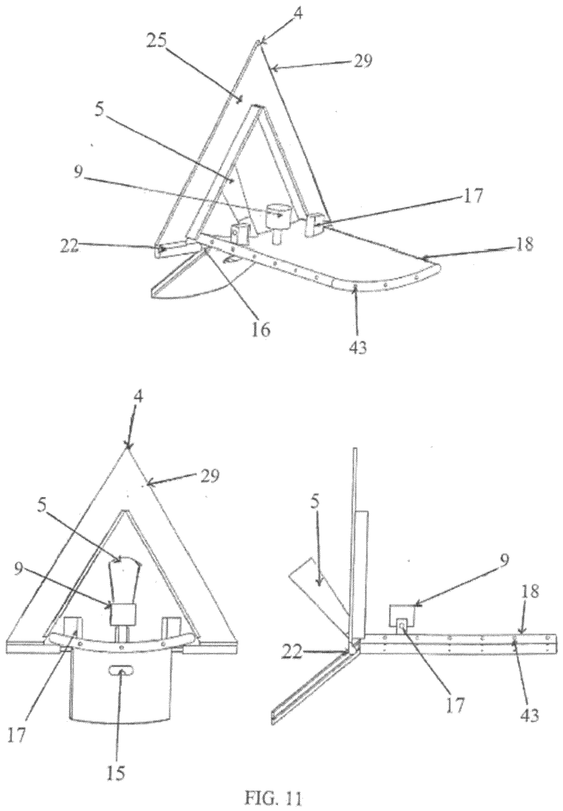

La figure 11 illustre en vues de perspective, de face et de profil, une variante avec une tête nettoyante constituée par une unité fonctionnelle (4) fonctionnant seule, elle-même composée d'un corps horizontal unique (18), avec un trou (15), d'un corps vertical double (29), uni branche et d'un manche (5) associés à un réservoir (9) et des canalisations débouchant sur les orifices(43).

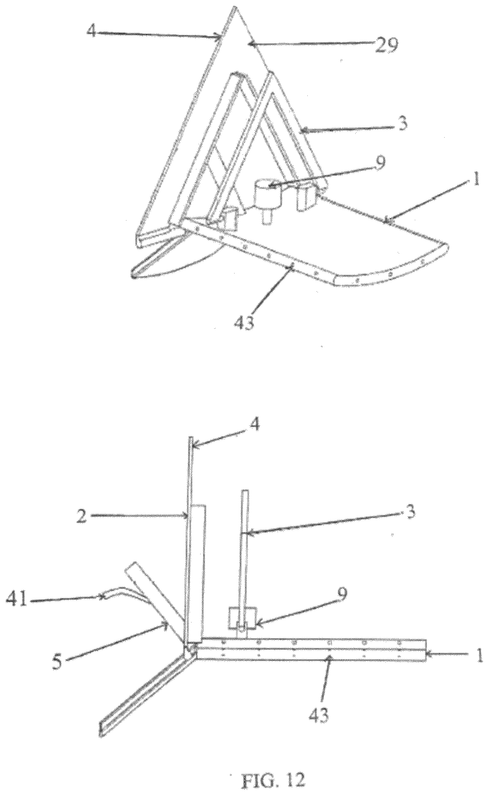

La figure 12 illustre en vues de perspective et profil, une variante de la dite brosse avec une tête nettoyante constituée par une unité fonctionnelle (4) composée d'un corps horizontal (1) et d'un corps vertical principal (2) associés à un corps vertical secondaire (3), des canalisations débouchant sur les orifices (43) et un réservoir (9) sans les autres accessoires.

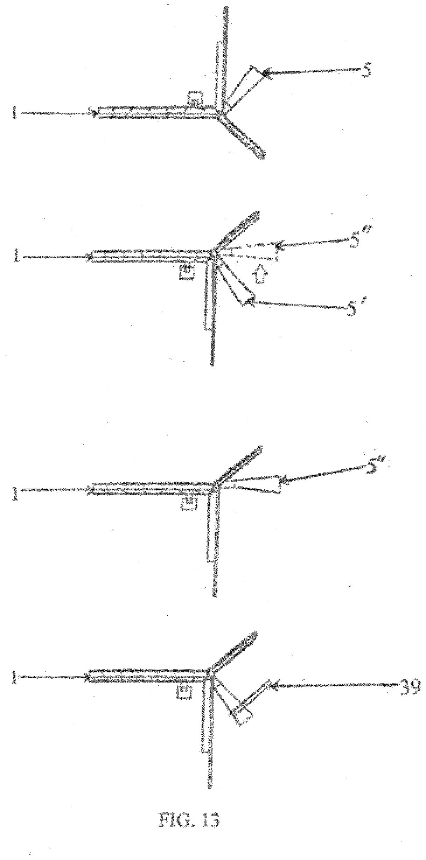

La figure 13 illustre sur des vues de profil, les différents aspects du manche conformément à une 11° caractéristique. Sur le dessin du haut, le corps horizontal (1) est en position de travail normal et est censé nettoyer la partie basse d'une jante. Sur le dessin en dessous, le corps horizontal (1) retourné est censé nettoyer la partie haute de la jante. On remarque le manche (5) basculant entre sa potion initiale (5') et la position imprimée par le basculement ou le pivotement (5"). Sur le troisième dessin, le manche est en position de bascule (5") sur un corps horizontal toujours orienté vers la partie haute. Sur le dessin en dessous on remarque le manche supplémentaire circulaire (39) fixé sur un manche (5') en position normale.

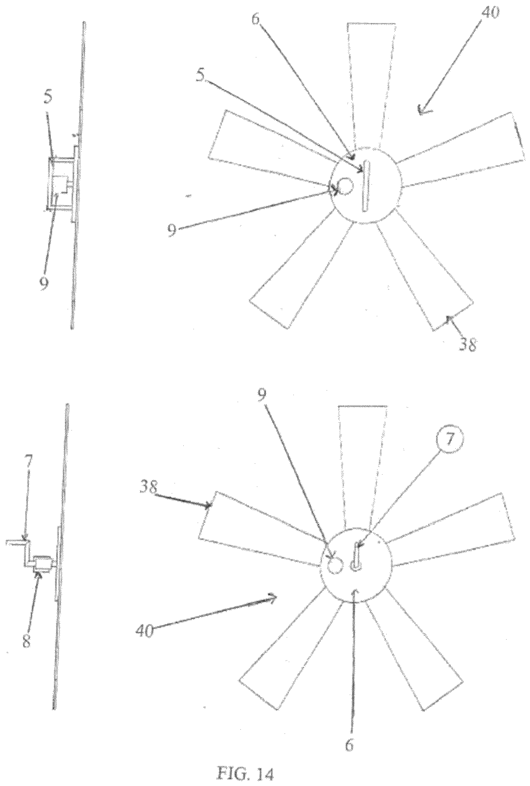

La figure 14 illustre en vues de face et profil, sur les dessins du haut, un socle (6) avec un manche (5) qui lui est directement fixé et sur les dessins du bas, un socle dont le manche est fixé par l'intermédiaire d'une manivelle (7) avec son manchon cylindrique creux (8). Ce socle est composé d'armatures (38) ménageant des encoches (40). Y est associé un réservoir (9) sans les autres accessoires.

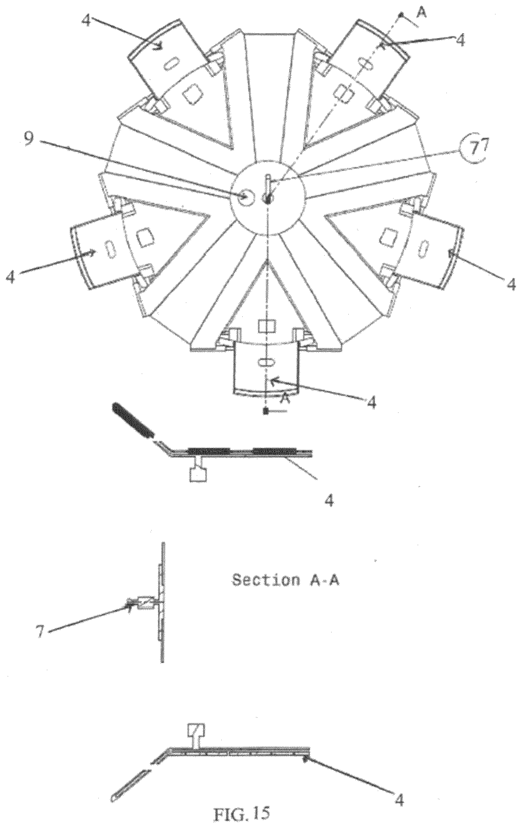

La figure 15 illustre en vues de face et en coupe, la dite brosse avec une tête nettoyante composée de 5 unités fonctionnelles (4) insérés dans un socle avec 5 encoches (40), associée à un manche (5) qui lui est fixé par l'intermédiaire d'une manivelle (7) et un réservoir (9) sans les autres accessoires.

Selon d'autres variantes non représentées le corps horizontal peut être multiple avec ou sans trou.

Le corps vertical principal peut être double, multiple, uni branche, double branche, multi branches. Les dits éléments pouvant s'associer entre eux en autant de combinaisons que possible avant de s'associer à un manche et/ou un corps vertical secondaire et/ou un socle qui peut être muni d'une ou plusieurs encoches et/ou une manivelle et/ou un manchon cylindrique creux et/ou un réservoir et/ou des canalisations et/ou un pressoir et/ou un revêtement et/ou des orifices. Toutes ces associations pouvant être coulées en un bloc.

Le dispositif est une brosse à fonctionnement manuel mais adaptable à un système de fonctionnement automatique destinée au nettoyage des jantes automobiles ou tout autre objet superposable qui selon une première caractéristique est présentée en kit à monter soi-même et comprenant obligatoirement un manche (5), une tête nettoyante représentée par soit un corps horizontal (1) soit un corps vertical principal (2), soit un corps vertical secondaire (3), soit une unité fonctionnelle (4), et des accessoires dont la présence n'est pas obligatoire à savoir, un socle (6), un réservoir (9), des canalisations (10), un pressoir (41), une manivelle (7) avec son manchon cylindrique creux (8), un revêtement spécifique (42) recouvrant les faces actives (44) munies d'orifices (43).

Selon une 2° caractéristique l'association des dits corps horizontal (1) et corps vertical principal (2) forme l'unité fonctionnelle (4) à laquelle peut éventuellement s'associer le corps vertical secondaire (3) et le dit corps horizontal (1), le dit corps vertical principal (2), la dite unité fonctionnelle (4) pouvant se fixer au niveau des encoches (5) du socle (6).

Selon une 3° caractéristique, la dite unité fonctionnelle (4) et ses composants à savoir le dit corps horizontal (1), le dit corps vertical principal (2),accessoirement le dit corps vertical secondaire (3), représentent chacune une forme de tête nettoyante à laquelle est associée un manche (5), l'ensemble pouvant s'associer ou non au socle (5),à la manivelle (7) avec son manchon cylindrique creux (8), au réservoir (9), aux canalisations (10) avec ses orifices (43), au pressoir (41), au revêtement (42), l'association des éléments du kit pouvant donc être partielle ou totale, et ce même si le résultat de cette association est coulé en un seul bloc et quel que soit le mode de fixation des dits éléments.

La figure1 illustre d'une part la structure d'une jante montrant l'arrondi (r) sur le dessin en haut à gauche avec en coupe sur le dessin du milieu les zones d'accès difficile (a) (b) (c), et d'autre part une tête de nettoyage uniquement constituée par un corps horizontal (1) sur le dessin en haut à droite et enfin ce corps horizontal s'insérant dans la jante. Comme le montre le dessin, le corps horizontal (1) glisse entre "l'arrondi" (r) et le disque de frein (f) puis grâce à ses angles atteint les zones a et b.

La forme de réalisation du dit corps horizontal est reprise sur la figure suivante.
Dans la forme de réalisation selon la figure 2, le corps horizontal est unique (18). Selon une 4° caractéristique, ce corps horizontal est lui-même composé de 2 parties. Une partie interne (11) d'épaisseur fine qui dans le plan frontal, suit une forme concave épousant l'arrondi (r) de la jante; une partie externe (12) d'épaisseur fine également et inclinée par rapport au plan de la partie interne (11) selon un angle spécifique latéral (14) pouvant varier entre 0 à 90° de sorte qu'elle épouse le débord de la jante avec la possibilité de toucher la portion de pneu adjacente. Cette partie externe est ici plane.

Selon une 5° caractéristique, la partie externe (12) étant toujours moins large que la partie interne (11), la zone de jonction de ces deux parties est automatiquement creusée d'un angle spécifique supérieur(13).

Ainsi la partie interne d'épaisseur fine glisse entre le disque de frein et l'arrondi pour atteindre la zone (a) située au-delà du dit disque de frein; l'angle spécifique supérieur (13) permet d'accéder à la zone (b) cachée par la branche.

Les dimensions du corps horizontal sont variables en fonction de la jante nettoyée mais définies de sorte que, la longueur puisse atteindre le bord interne de la jante et même le déborder de façon à pouvoir le mobiliser aisément, la largeur permette de l'insérer entre 2 rayons voisins, l'épaisseur permette de le glisser entre le disque de frein et la jante, le rayon soit superposable à celui de la jante nettoyée.

A titre d'exemple non limitatif si la distance entre deux rayons voisins mesure 10 cm avec un arrondi « r » faisant un rayon de 20 cms, la distance entre l'arrondi et le disque de frein faisant 5 cms, la largeur de l'arrondi mesurant 15 cms d'un bord à l'autre, le corps horizontal ferra 17 cms de longueur avec un rayon de 20 cms, 9 cms de largeur et 1 cm d'épaisseur de façon le mobiliser aisément.

Conformément à une 6° caractéristique, le corps horizontal peut être percé d'un trou (15). Les dimensions du trou destiné à laisser passer la valve sont définies de sorte que la mise en mouvement de la brosse ne percute pas la dite valve.

Les dimensions et la position du manche (5) sont également variables. Le manche est défini de sorte à pouvoir accueillir un bouton pressoir (41) et positionné de sorte que la main ne touche aucun élément de la jante au cours du nettoyage. Ce, afin d'éviter les blessures.

La forme de réalisation selon la figure 3 représente en vue de perspective, profil et en vue inférieure une variante de la forme précédente avec les accessoires à savoir, les canalisations (10), le réservoir (9), le pressoir (41), les orifices (43) visibles sur la face active (44) et les faces latérales du corps horizontal (18). Le revêtement n'a pas été représenté pour ne pas masquer les orifices.

La forme de réalisation selon la figure 4 illustre en vue de perspective, une variante avec une tête nettoyante représentée par un corps horizontal unique (18) associé à un manche, un pressoir (41) et un réservoir positionné sur le manche (5). Les dimensions du réservoir sont variables mais ce dernier ne doit pas gêner les mouvements.

La forme de réalisation selon la figure 5 représente en vue de perspective et en coupe une variante de la dite brosse avec une tête nettoyante composée d'un corps horizontal double (19) avec ses deux parties séparées par un espace (19'), associé à un manche (5) et un bouton pressoir (41) sans les autres accessoires. Les dimensions de l'espace (19') entre les deux parties du corps horizontal sont définies de sorte qu'un rayon de jante puisse s'y glisser. Cette variante est destinée aux jantes à rayons multiples et fins.

La forme de réalisation selon la figure 6 représente en vue de perspective, une variante de la dite brosse avec une tête nettoyante constituée par un corps horizontal double corps (21) associé à un manche double (36) sans les autres accessoires. Sur le dessin du haut, le dit corps horizontal est en position fermée et sur le dessin du bas, il est en position ouverte laissant apparaitre l'espace entre les deux parties (21').

La mise en mouvement du manche imprime au corps horizontal son ouverture ou sa fermeture entrainant de fait un mouvement de translation. Cette opération est destinée à réduire les mouvements de va et vient pendant le nettoyage. Au cas où s'associe au corps horizontal (21) un corps vertical principal (2), ce mouvement permet également de nettoyer sans effort supplémentaire, les rayons voisins.

La forme de réalisation selon la figure 7 illustre en vues de face et de perspective, une variante de la dite brosse avec une tête nettoyante représentée par le corps vertical principal qui est ici unique, uni branche (25) avec son support (22), son appendice (23) conformément à une 7° caractéristique et fonctionnant seul avec un manche sans les autres accessoires.

Selon une 8° caractéristique chaque branche du corps vertical principal est composée d'au moins 2 faces avec une face interne (31) et une face externe (32) d'épaisseurs fines qui sont réunies par un angle (33) pouvant varier de 0 à 180 degrés exclus telles qu'illustré sur la vue en section. Sur cette figure l'angle est de 90°.

Toujours sur cette même figure, on voit que la face interne (31) est beaucoup moins haute et moins large que la face externe (32) conformément à une 9° caractéristique.

Selon une 10° caractéristique chaque branche du corps vertical est inclinée dans les 2 plans. Cette inclinaison varie dans le plan frontal entre 0 et 90 degrés exclus et dans le plan sagittal entre 0 et 90 degrés exclus également. Ce, afin d'adapter la configuration de la brosse à celle de la jante nettoyée.

A titre d'exemple non limitatif, pour un une jante dont le rayon mesure les dimensions suivantes: face externe 30 cms de hauteur, pour une largeur de 5 cms; face interne 25 cms de hauteur en raison de l'angle formée par l'union avec la face interne de la branche adjacente, 5 cms de largeur; distance par rapport au disque de frein 5 cms;

Le corps vertical principal présentera les dimensions suivantes : face externe (32) 30 cms de hauteur pour 5 cms de largeur; face interne (31) 23 cms de hauteur pour ne pas heurter l'angle précédemment cité, 7 cms de largeur laissant une distance par rapport au disque de frein de 3 cms. De cette façon, la dite brosse peut être mobilisée sans heurter le disque de frein.

La forme de réalisation selon la figure 8 illustre en vue de face et en perspective, une variante de la dite brosse avec une tête de nettoyage constituée par un corps vertical principal unique, double branche (26) fonctionnant seul avec un manche (5) sans les accessoires. La position du manche (5) est variable. Les dimensions respectent les mêmes caractéristiques que précédemment en dehors de la taille de l'espace entre les deux branches qui varie selon la jante nettoyée. Ce type de configuration étant destiné aux jantes à rayons multiples et fins, le dit rayon doit pouvoir se glisser dans le dit espace. La section montre la face interne (31), la face externe (32) de chacune des branches du corps vertical principal unique, double branche (26) de même que l'angle (33) les réunissant.

La forme de réalisation selon la figure 9 illustre en vue de perspective, de face et profil une variante de la dite brosse avec une tête de nettoyage constituée par un corps vertical principal double (29), uni branche (25) fonctionnant seul avec un manche (5) sans les accessoires. La position du manche est variable, ici centrale.

Dans cette variante le 2^{nd} corps vertical principal est positionné symétriquement par rapport au premier. Les dimensions des faces de chaque branche étant les mêmes que celles précédemment citées.

La forme de réalisation selon la figure 10 illustre en vues de perspective de face et section, une variante de la dite brosse avec une tête nettoyante composée d'un corps vertical principal double (29) uni branche (25) dont les branches présentent 3 faces (31) (32) (34), fonctionnant seul avec un manche (5) sans les accessoires. La troisième face (34) présente les mêmes caractéristiques que celles de la face interne(31). Les dimensions sont les mêmes que celles décrites pour la figure 7.

La forme de réalisation selon la figure 11 illustre en vues de perspective, de face et profil, une variante avec une tête nettoyante constituée par une unité fonctionnelle (4) fonctionnant seule, elle-même composée d'un corps horizontal unique (18), avec un trou (15), d'un corps vertical double (29) uni branche (25) et d'un manche (5) associés à un réservoir (9) et des canalisations non visibles sur ce schéma débouchant sur les orifices (43).

Le dit corps vertical principal se fixant par son appendice (23) localisé au niveau de son support (22) à l'appendice distal (17) du dit corps horizontal. Le dit corps horizontal et le dit corps vertical principal reprenant les mêmes caractéristiques que celles décrites précédemment. Il est à noter que les dits appendices peuvent imprimer aux dits corps verticaux principaux, leur angulation. Les dimensions respectent également celles précédemment citées.

La forme de réalisation selon la figure 12 illustre en vues de perspective et de profil, une variante avec une tête nettoyante représentée par l'unité fonctionnelle elle-même composée d'un corps horizontal (1), d'un corps vertical principal (2), d'un corps vertical accessoire (3) associés à un manche (5), un bouton pressoir (41), des canalisations non visibles sur ce schéma débouchant sur les orifices (43) et un réservoir (9) sans les autres accessoires.

Les dimensions du corps vertical secondaire (3) sont définies de sorte qu'il puisse dans premier temps se glisser dans l'espace entre deux rayons voisins d'une même jante puis secondairement entre le rayon de la jante et le disque de frein afin de pouvoir le mobiliser sans percuter ce dernier. Les dimensions du corps horizontal (1), du corps vertical principal (3) et du manche (5) répondent aux mêmes critères que ceux précédemment cités.

La forme de réalisation selon La figure 13 illustre sur des vues de profil, différentes présentations du manche conformément à une 11° caractéristique. Sur le dessin du haut, le corps horizontal (1) en position de travail normal, est censé nettoyer la partie basse d'une jante. Sur le dessin en dessous, le corps horizontal (1) retourné est censé nettoyer la partie haute de la jante. On remarque le manche basculant de sa position initiale (5') à la position imprimée par le basculement ou le pivotement (5"). Sur le troisième dessin, le manche est en position de bascule (5") sur un corps horizontal toujours orienté vers la partie haute. Sur le dessin en dessous on remarque le manche supplémentaire circulaire(39). La position du manche sur la tête nettoyante est variable mais le basculement et l'adjonction d'un manche supplémentaire doivent rester possibles. Les dimensions du manche doivent permettre une prise en main aisée en plus de respecter les critères précédemment cités. Par ailleurs le manche peut prendre différentes présentations. Il peut être de forme conique tel que sur les figures 2 ou 3 mais aussi en forme d'anse tel que sur les figures 5 ou 7.

La forme de réalisation selon la figure 14 illustre en vues de face et profil sur les dessins du haut, un socle (6) avec un manche qui lui est directement fixé et sur les dessins du bas, un socle (6) dont le manche est fixé par l'intermédiaire d'une manivelle (7). Le dit socle est composé d'armatures (38) ménageant des encoches (40). Y est associé un réservoir (9) sans les autres accessoires. Le dit socle est ici complet c'est-à-dire réalisant un cercle et comporte cinq encoches (40). Chaque encoche est conçue pour recevoir un corps horizontal ou une unité fonctionnelle. Les dimensions des encoches sont donc directement corrélées à celles des corps horizontaux (1) ou des unités fonctionnelles (4) et donc à celles de la jante.

Le socle peut également accepter les accessoires tels que le réservoir la manivelle avec son manchon cylindrique creux (8) ici représentés. La face du socle en contact avec la jante peut être également active donc munie d'orifices.

La forme de réalisation selon la figure 15 illustre en vues de face et en section, une variante avec une tête de nettoyage composée de 5 unités fonctionnelles (4) insérées dans un socle avec 5 encoches (40) associé à un manche qui lui est fixé par l'intermédiaire d'une manivelle (7) avec son manchon cylindrique creux (8), un réservoir (9) sans les autres accessoires. Les dimensions du socle (6) et des unités fonctionnelles (4) répondent aux mêmes critères que précédemment. Il est à noter que le corps horizontal ou l'unité fonctionnelle qui est fixé au socle peut être muni d'un manche propre qui automatiquement devient inactif. Au cas où l'unité fonctionnelle est spécifiquement destinée à être intégré à un socle, le manche (5) peut être supprimé à la conception tel que sur ce schéma.

Cette brosse est destinée au nettoyage des jantes mécaniques et plus particulièrement automobiles. Vu le nombre de véhicules en circulation, environ 40 millions rien qu'en France, sa mise à disposition au plus grand nombre d'automobilistes ne peut relever que de la production industrielle

## Revendications

1. Brosse à fonctionnement manuel mais adaptable à un système de fonctionnement automatique destinée au nettoyage des jantes automobiles ou tout autre objet superposable **caractérisée en ce qu'**elle est présentée en kit à monter soi-même et comprenant obligatoirement un manche (5), une tête nettoyante comprenant un corps horizontal (1) et le cas échéant un corps vertical principal (2), ou un corps vertical secondaire (3), ou une unité fonctionnelle (4) formé par un corps horizontal (1) et un corps vertical principal (2), et des accessoires dont la présence n'est pas obligatoire à savoir, un socle (6), un réservoir (9), des canalisations (10), un pressoir (41), une manivelle (7) avec son manchon cylindrique creux (8), un revêtement spécifique (42) recouvrant les faces actives (44) munies d'orifices (43), ledit corps horizontal dit horizontal car fonctionnant en position horizontale étant composé d'une partie interne (11) d'épaisseur fine qui dans le plan frontal, suit une forme concave épousant l'arrondi de la jante et pouvant se subdiviser en plusieurs branches donnant les formes unique (18), double (19), multiple, double corps (21) et d'une partie externe (12) d'épaisseur fine également qui est inclinée par rapport au plan de la partie interne selon un angle spécifique latéral (14) pouvant varier entre 0 à 90°, ladite partie externe (12) pouvant être arrondie ou plane ou tous les intermédiaires entre les deux, et pouvant comporter des angles, des brisures.

2. Brosse présentée en kit selon la revendication 1 **caractérisée en ce que** l'association des dits corps horizontal (1) et corps vertical principal (2) forme l'unité fonctionnelle (4) à laquelle peut éventuellement s'associer le corps vertical secondaire (3) et le dit corps horizontal (1), le dit corps vertical principal (2), la dite unité fonctionnelle (4) étant apte à se fixer au niveau des encoches (5) du socle (6).

3. Brosse présenté en kit selon la revendication 1 **caractérisée en ce que** la dite unité fonctionnelle (4) et ses composants à savoir le dit corps horizontal (1), le dit corps vertical principal (2), accessoirement le dit corps vertical secondaire (3), représentent chacune une forme de tête nettoyante à laquelle est associée un manche (5), l'ensemble pouvant s'associer ou non au socle (5), à la manivelle (7) avec son manchon cylindrique creux (8), au réservoir (9) ,aux canalisations (10) avec ses orifices (43), au pressoir (41), au revêtement (42), l'association des éléments du kit pouvant donc être partielle ou totale, et ce même si le résultat de cette association est coulé en un seul bloc et quel que soit le mode de fixation des dits éléments.

4. Brosse présentée en kit selon la revendication 1 **caractérisée en ce que** la partie interne (11) du corps horizontal étant moins large que la partie externe (12), la zone de jonction de ces 2 parties est automatiquement creusée d'un angle (13) variant entre 0 et 180° et ce, même si l'angle prend naissance sur la partie interne.

5. Brosse présentée en kit selon la revendication 1 **caractérisée en ce que** le corps horizontal peut être creusé d'un trou (4) laissant passer la valve.

6. Brosse présentée en kit selon la revendication 1 **caractérisée en ce que** le corps vertical principal (1) fonctionnant en position verticale est composé d'un support (22) avec son appendice (23), d'au moins une branche (24) pouvant se subdiviser en plusieurs mais toutes portées par le même support donnant ainsi un corps vertical principal uni branche (25), double branche (26) ou multi branches (27) et qu'il peut être unique (28), double (29) ou multiple (30) chacun sur son support.

7. Brosse présentée en kit selon la revendication 1 ou 6 **caractérisée en ce que** chaque branche du dit corps vertical principal est composé d'au moins 2 faces d'épaisseurs fines avec une face interne (11) et une face externe (12) réunies par un angle (33) pouvant varier de 0 à 180 degrés exclus et au cas où existe une troisième face (34), cette dernière répond aux mêmes critères que ceux de la face interne.

8. Brosse présentée en kit selon la revendication 1, 6 ou 7 **caractérisée en ce que** la face interne (31) de la branche du corps vertical principal peut être moins haute et moins large que sa face externe (32), et que les caractéristiques de la face interne s'appliquent à une troisième face si elle existe.

9. Brosse présentée en kit selon la revendication 1 ou 7 **caractérisée en ce que** chaque branche du corps vertical est inclinée (35) dans le plan frontal entre 0 et 90 degrés exclus ainsi que dans le plan sagittal entre 0 et 90 degrés exclus.

10. Brosse présentée en kit selon la revendication 1 **caractérisée en ce que** le manche susceptible d'accueillir le réservoir, peut se présenter sous des formes variables et qu'il peut être pivotant (37), basculant (38) dans le sens opposé et /ou adaptable à un manche supplémentaire circulaire (39) ou à un manche télescopique par l'intermédiaire des emplacements prévus à cet effet et ce, quel que soit le type d'emplacement ou de fixation.

11. Brosse présentée en kit selon la revendication 1 **caractérisée en ce que** le socle (6) destiné à fixer plusieurs unités fonctionnelles ou plusieurs corps horizontaux est composé d'armatures (38) ménageant au moins 2 encoches (40) disposées selon un cercle, chaque encoche (40) ayant une structure permettant la fixation, soit d'un corps horizontal (1), soit d'une unité fonctionnelle (4), et ce quel que soit le mode de fixation et que la face de l'encoche au contact de la jante peut être active donc munie d'orifices.

12. Brosse présentée en kit selon la revendication 1 **caractérisée en ce que** les dits revêtements adaptables sont de forme parfaitement superposables à celle des faces actives de la brosse, y sont fixées et ce, quel que soit le système de fixation choisi.

13. Brosse présentée en kit selon la revendication 1 **caractérisée en ce qu'**il est prévu que :
- le corps horizontal fonctionne seul c'est-à-dire qu'il représente à lui seul la tête nettoyante auquel cas, il est muni d'un manche et peut être associé à un ou plusieurs autres éléments du kit,
- le corps vertical fonctionne seul c'est-à-dire qu'il représente à lui seul la tête nettoyante auquel cas, il est muni d'un manche et peut être associé ou à un ou plusieurs autres éléments du kit
- l'unité fonctionnelle fonctionne seule auquel cas elle est munie d'un manche et peut être associée à un ou plusieurs autres éléments du kit,
- le dispositif soit réalisé avec un socle muni d'au moins 2 encoches disposées selon un cercle, chaque encoche pouvant fixer soit un corps horizontal, soit une unité fonctionnelle, auquel cas le dit socle est muni d'un manche qui lui est soit directement rattaché, soit rattaché par l'intermédiaire d'une manivelle et le dit socle pouvant être associé à un ou plusieurs autres éléments du kit.
- dans chacune de ces formes de réalisation, il existe autant de variantes possibles qu'il y a de choix entre les corps horizontaux simple, double, multiple, double corps, les corps verticaux principaux uni branche, double branche ou multi branche, unique double ou multiples, le socle avec deux ou plusieurs encoches auxquelles peuvent s'associer un ou plusieurs autres éléments du kit, et ce même si le résultat des dites associations est coulé en un seul bloc.

## Patentansprüche

1. Bürste, wobei die Bürste manuell bedienbar ist, aber an ein automatisches Betriebssystem zum Reinigen von Fahrzeugfelgen oder eines anderen stapelbaren Objekts anpassbar ist, **dadurch gekennzeichnet, dass** sie sich als einem selbstmontierbaren Bausatz ausgebildet und notwendigerweise einen Griff (5) und einen Reinigungskopf mit einem horizontalen Körper (1) und ggf. einem vertikalen Hauptkörper (2) oder einem sekundären vertikalen Körper (3) oder einer durch einen horizontalen Körper (1) und einen vertikalen Hauptkörper (2) gebildeten Funktionseinheit (4), und nicht obligatorischem Zubehör, nämlich einer Basis (6), einem Tank (9), Röhren (10), einer Presse (41), einem Kurbel (7) mit seiner zylindrischen hohlen Hülse (8), einer spezifischen, die aktiven Flächen (44) mit Öffnungen (43) bedeckenden Beschichtung (42), umfasst, wobei der horizontale Körper, weil er in horizontaler Position arbeitet, aus einem inneren Teil (11) von geringer Dicke, der in der Frontebene eine konkave Form hat, die an die abgerundete Form der Felge angepasst ist und in mehrere Abschnitt unterteilt werden können, was die Forme mit einfachem (18), doppeltem (19), mehrfachen, doppelten Körper (21) ergibt, und aus einem äußeren Teil (12) von ebenfalls geringer Dicke, der relativ zu der Ebene des inneren Teils unter einem bestimmten seitlichen Winkel (14) geneigt ist, der von 0 bis 90° variieren kann, zusammengesetzt ist, wobei der äußere Teil (12) abgerundet oder flach ist oder irgendeine Zwischenform aufweist und Winkel und Brüche haben kann.

2. Bausatzbürste nach Anspruch 1, **dadurch gekennzeichnet, dass** die Kombination aus dem horizontalen Körper (1) und dem vertikalen Hauptkörper (2) die Funktionseinheit (4) bildet, der der sekundäre vertikale Körper (3) optional zugeordnet werden kann, wobei der horizontale Körper (1) und der vertikale Hauptkörper (2) als Funktionseinheit (4) an den Kerben (5) der Basis (6) befestigt werden können.

3. Bausatzbürste nach Anspruch 1, **dadurch gekennzeichnet, dass** die Funktionseinheit (4) und ihre Komponenten, nämlich der horizontale Körper (1), der vertikale Hauptkörper (2), gegebenenfalls der sekundäre vertikale Körper (3), jeweils eine Reinigungskopfform darstellen, dem ein Griff (5) zugeordnet ist, wobei der Zusammenbau der Basis (5), der Kurbel (7) mit ihrer hohlzylindrischen Hülse (8), dem Tank (9), den Röhren (10) mit ihren Öffnungen (43), der Presse (41), der Beschichtung (42) zugeordnet sein kann oder nicht, wobei die Elemente des Bausatzes somit teilweise oder vollständig miteinander verbunden werden können, und sogar wenn das Ergebnis dieser Verbindung in einen einzelnen Block unabhängig von der Befestigungsmethode der genannten Elemente gegossen wird.

4. Bausatzbürste nach Anspruch 1, **dadurch gekennzeichnet, dass**, da der innere Teil (11) des horizontalen Körpers schmaler als der äußere Teil (12) ist, die Übergangszone dieser zwei Teile automatisch mit einem Winkel (13) zwischen 0 und 180° ausgehöhlt wird, auch wenn der Winkel vom inneren Teil ausgeht.

5. Bausatzbürste nach Anspruch 1, **dadurch gekennzeichnet, dass** der horizontale Körper mit einem Loch (4) ausgehöhlt werden kann, das das Ventil passieren lässt.

6. Bausatzbürste nach Anspruch 1, **dadurch gekennzeichnet, dass** der vertikale Hauptkörper (1), der in vertikaler Position arbeitet, aus einem Träger (22) mit seinem Ansatz (23), mindestens einem Abschnitt (24), der in mehrere Abschnitte unterteilt werden können, die jedoch alle von demselben Träger getragen werden, besteht, wodurch er ein vertikaler Hauptkörper mit einem einzigen Abschnitt (25), einem Doppelabschnitt (26) oder mehreren Abschnitten (27) ergibt, und dass er einfach (28), doppelt (29) oder mehrfach (30) jeweils auf seinem Träger sein kann.

7. Bausatzbürste nach Anspruch 1 oder 6, **dadurch gekennzeichnet, dass** jeder Abschnitt des vertikalen Hauptkörpers aus mindestens zwei Flächen mit geringer Dicke mit einer Innenfläche (11) und einer Außenfläche (12) besteht, die unter einem Winkel (33) von 0 bis 180 Grad (nicht einschließlich) miteinander verbunden sind, wobei, wenn eine dritte Fläche (34) vorhanden ist, diese die gleichen Kriterien wie die innere Fläche erfüllt.

8. Bausatzbürste nach Anspruch 1, 6 oder 7, **dadurch gekennzeichnet, dass** die Innenfläche (31) des Abschnitts des vertikalen Hauptkörpers weniger hoch und schmaler als ihre Außenfläche (32) sein kann, und dass die Eigenschaften der Innenfläche für eine dritte Fläche, falls vorhanden, gelten.

9. Bausatzbürste nach Anspruch 1 oder 7, **dadurch gekennzeichnet, dass** jeder Abschnitt des vertikalen Körpers in der Frontalebene zwischen 0 und 90 Grad (nicht einschließlich) und in der Sagittalebene zwischen 0 und 90 Grad (nicht einschließlich) geneigt ist (35).

10. Bausatzbürste nach Anspruch 1, **dadurch gekennzeichnet, dass** der Griff, der zur Aufnahme des Vorratsbehälters fähig ist, variable Formen aufweisen kann, und dass er schwenkbar (37), kippbar (38) in entgegengesetzter Richtung und/oder an einen zusätzlichen runden Griff (39) oder einen teleskopischen Griff über die dafür vorgesehenen Stellen anpassbar sein kann, unabhängig von der Art des Ortes oder der Befestigung.

11. Bausatzbürste nach Ansprüche 1, **dadurch gekennzeichnet, dass** die Basis (6) für die Befestigung mehrerer Funktionseinheiten oder horizontalen Körper aus Armaturen (38) mit mindestens zwei kreisförmig angeordneten Kerben (40) besteht, wobei jede Kerbe (40) eine Struktur für die Befestigung entweder eines horizontalen Körpers (1) oder einer Funktionseinheit (4) unabhängig von der Befestigungsmethode aufweist, und dass die Fläche der Kerbe in Kontakt mit der Felge aktiv und daher mit Öffnungen vorgesehen sein kann.

12. Bausatzbürste nach Anspruch 1, **dadurch gekennzeichnet, dass** die adaptierbaren Beschichtungen auf den aktiven Flächen der Bürste perfekt stapelbare Formen aufweisen, und daran befestigt sind, unabhängig vom gewählten Befestigungssystem.

13. Bausatzbürste nach Anspruch 1, **dadurch gekennzeichnet, dass**:
- der horizontale Körper allein funktioniert, d.h. er allein den Reinigungskopf darstellt, und dabei mit einem Griff versehen ist und einem oder mehreren anderen Elementen des Bausatzes zugeordnet werden kann;
- der vertikale Körper allein funktioniert, d.h. er allein den Reinigungskopf darstellt, und dabei mit einem Griff versehen ist und einem oder mehreren anderen Elementen des Bausatzes zugeordnet werden kann;
- die Funktionseinheit allein funktioniert und dabei mit einem Griff versehen ist und einem oder mehreren anderen Elementen des Bausatzes zugeordnet werden kann;
- die Vorrichtung mit einer Basis mit mindestens zwei kreisförmig angeordneten Kerben versehen ist, wobei jede Kerbe entweder einen horizontalen Körper oder eine Funktionseinheit befestigen kann und dabei die Basis mit einem entweder direkt oder über eine Kurbel an dieser befestigten Griff versehen ist, und die Basis einem oder mehreren anderen Elementen des Bausatzes zugeordnet sein kann,
- Bei jeder dieser Ausführungsformen, es genauso viele mögliche Varianten wie Auswähle zwischen den horizontalen Köpern mit einfachem, doppeltem, mehrfachem, doppeltem Körper, den einfachem doppeltem oder mehrfachem vertikalen Hauptkörper mit einzelnem Abschnitt, doppeltem Abschnitt oder mehrfachem Abschnitt, der Basis mit zwei oder mehr Kerben, den ein oder mehrere andere Elemente des Kits zugeordnet werden können, und auch, wenn das Ergebnis dieser Zuordnung in einen Block gegossen wird.

## Claims

1. Brush, said brush being manually operable but adaptable to an automatic operating system for cleaning automobile rims or any other stackable object, **characterized in that** it is in a self-assembly kit form and necessarily comprises a handle (5), a cleaning head comprising a horizontal body (1) and, optionally, a main vertical body (2), or a secondary vertical body (3), or a functional unit (4) formed by a horizontal body (1) and a main vertical body (2), and accessories whose presence is not compulsory, i.e. a base (6), a tank (9), pipes (10), a press (41), a crank (7) provided with its cylindrical hollow sleeve (8), a specific coating (42) covering the active faces (44) provided with orifices (43), said horizontal body because operating in horizontal position being composed of an inner portion (11) of thin thickness which has in the frontal plane a concave shape matching the rounded shape of the rim and being able to be subdivided into several branches giving the simple (18), double (19), multiple, double body (21) shapes and an outer portion (12) also of thin thickness which is inclined relative to the plane of the inner portion at a specific lateral angle (14) which can vary from 0 to 90°, said outer portion (12) being rounded or flat or having any intermediate shape, and which can have angles, broken pieces.

2. Brush in kit form according to claim 1, **characterized in that** the combination of said horizontal body (1) and main vertical body (2) form the functional unit (4) to which the secondary vertical body (3) can be optionally associated, wherein said horizontal body (1) and said main vertical body (2) as said functional unit (4) being adapted to be fixed at the notches (5) of the base (6).

3. Brush in kit form according to claim 1, **characterized in that** said functional unit (4) and its components, namely said horizontal body (1), said main vertical body (2), optionally said secondary vertical body (3), each represent a form of cleaning head with which a handle (5) is associated, wherein the assembly being able to be associated or not to the base (5), the crank (7) provided with its hollow cylindrical sleeve (8), the tank (9), the pipes (10) provided with its orifices (43), the press (41), the coating (42), wherein the elements of the kit being thus able to be partially or totally associated with one another, and even if the result of this association is cast in a single block and regardless of the method of attachment of said elements.

4. Brush in kit form according to claim 1, **characterized in that**, as the inner portion (11) of the horizontal body is narrower than the outer portion (12), the junction zone of these 2 portions is automatically hollowed out with an angle (13) between 0 and 180°, even if the angle originates on the inner portion.

5. Brush in kit form according to claim 1 **characterized in that** the horizontal body can be hollowed out with a hole (4) allowing the valve to pass.

6. Brush in kit form according to claim 1, **characterized in that** the main vertical body (1) operating in a vertical position is composed of a support (22) provided with its appendix (23), at least one branch (24) which can be subdivided into several branches which are however all carried by the same support, giving thereby a vertical main body having a single branch (25), double branch (26) or multiple branches (27) and **in that** it can be single (28), double (29) or multiple (30) each on its support.

7. Brush in kit form according to claim 1 or 6 **characterized in that** each branch of said main vertical body is composed of at least 2 faces of thin thicknesses with an inner face (11) and an outer face (12) joined together by an angle (33) which can vary from 0 to 180 degrees excluded and, if there is a third face (34), the latter meets the same criteria as those of the inner face.

8. Brush in kit form according to claim 1, 6 or 7 **characterized in that** the inner face (31) of the branch of the main vertical body can be less high and narrower than its outer face (32), and en that the characteristics of the inner face apply to a third face, if it exists.

9. Brush in kit form according to claim 1 or 7, **characterized in that** each branch of the vertical body is inclined (35) in the frontal plane between 0 and 90 degrees excluded and in the sagittal plane between 0 and 90 degrees excluded.

10. Brush in kit form according to claim 1, **characterized in that** the handle, capable of accommodating the reservoir, can be in variable forms and en that it can pivot (37), tilt (38) in the opposite direction and/or be adaptable to an additional circular handle (39) or a telescopic handle via the locations provided for this purpose, regardless of the type of location or attachment.

11. Brush in kit form according to claim 1, **characterized in that** the base (6) for fixing a plurality of functional units or horizontal bodies is composed of armatures (38) providing at least 2 notches (40) arranged in a circle, each notch (40) having a structure for fixing either a horizontal body (1) or a functional unit (4), regardless of the method of attachment, and **in that** the face of the notch in contact with the rim can be active and therefore provided with orifices.

12. Brush in kit form according to claim 1, **characterized in that** said adaptable coatings have forms that are perfectly stackable on those of the active faces of the brush, and are fixed thereto, whatever the fastening system chosen.

13. Brush in kit form according to claim 1, **characterized in that**:
- the horizontal body operates alone, that is to say it represents alone the cleaning head in which case it is provided with a handle and can be associated with one or more other elements of the kit,
- the vertical body operates alone, that is to say that it represents alone the cleaning head in which case it is provided with a handle and can be associated with one or more other elements of the kit,
- the functional unit operates alone in which case it is provided with a handle and can be associated with one or more other elements of the kit,
- the device is made with a base provided with at least two notches arranged in a circle, each notch being able to fix either a horizontal body or a functional unit, in which case said base is provided with a handle which is either directly attached thereto, or attached via a crank, and said base can be associated with one or more other elements of the kit,
- in each of these embodiments, there are as many possible variants as there are choices between the horizontal single, double, multiple, double body, the main vertical body with a single branch, double branch or multiple branch, single double or multiple, the base with two or more notches with which one or more other elements of the kit can be associated, and even if the result of said associations is cast in one block.
